# EUROPÄISCHE PATENTSCHRIFT

(11) **EP 1 523 610 B1**
(45) Veröffentlichungstag und Bekanntmachung des Hinweises auf die Patenterteilung: **14.01.2009**
(21) Anmeldenummer: 03766192.3
(22) Anmeldetag: 16.07.2003
(51) Int. Cl.: F01L 1/34, F01L 1/46, F01L 1/352, F01L 1/356

(54) **VORRICHTUNG ZUR VERÄNDERUNG DER STEUERZEITEN EINER BRENNKRAFTMASCHINE**
DEVICE FOR MODIFYING THE CONTROL TIMES OF AN INTERNAL COMBUSTION ENGINE
DISPOSITIF PERMETTANT DE MODIFIER LES TEMPS DE COMMANDE D'UN MOTEUR A COMBUSTION INTERNE

(30) Priorität: 24.07.2002 DE 10233698; 25.07.2002 US 398624 P
(43) Veröffentlichungstag der Anmeldung: 20.04.2005
(73) Patentinhaber: Schaeffler KG, 91074 Herzogenaurach (DE)
(72) Erfinder: SCHÄFER, Jens, 91074 Herzogenaurach (DE); STEIGERWALD, Martin, 91056 Erlangen (DE); HEYWOOD, Jonathan, 96175 Pettstadt (DE)
(86) Internationale Anmeldenummer: PCT/EP2003/007712
(87) Internationale Veröffentlichungsnummer: WO 2004/013467

(56) Entgegenhaltungen:
- US-A- 3 977 275
- US-A1- 2002 017 257

## Beschreibung

### Gebiet der Erfindung

Die Erfindung betrifft eine Vorrichtung zur Veränderung der Steuerzeiten einer Brennkraftmaschine mit einer einen Drehwinkel zwischen einem Antriebsrad und einer Nockenwelle verändernden Verstelleinrichtung, die als Axialexzentergetriebe ausgebildet ist, mit einem eine erste stirnseitige Verzahnung aufweisenden, drehfest mit dem Antriebsrad verbundenen Verstellelement und mit einer in ihrem radial äußeren Bereich eine zweite stirnseitige Verzahnung aufweisenden Scheibe, deren zweite stirnseitige Verzahnung über eine Stelleinrichtung in eine Verstellbewegung versetzt wird, wobei die stirnseitigen Verzahnungen partiell in Eingriff gebracht werden und wobei die Zähnezahl der stirnseitigen Verzahnungen um zumindest einen Zahn voneinander abweichen.

Es sind Vorrichtungen zur Veränderung der Steuerzeiten bekannt, bei denen die Verstellung der Nockenwelle gegenüber dem Antriebsrad hydraulisch erfolgt, d. h. über einen in axialer Richtung der Nockenwelle beweglichen Kolben und eine mit diesem in Wirkverbindung stehende Schrägverzahnung wird eine rotative Verstellung erzielt, oder das hydraulische Verstellsystem weist einen Schwenkflügel- oder Flügelzellenantrieb auf, welcher den hydraulischen Druck unmittelbar ohne die Verwendung einer Schrägverzahnung in eine Rotativbewegung umsetzen kann. Darüber hinaus sind bereits elektromechanische Verstellsysteme bekannt, die ein Planetengetriebe aufweisen, bei welchem eine der Wellen mit einem Rotor eines Elektromotors in Verbindung steht.

Eine Vorrichtung zur Veränderung der Steuerzeiten einer Brennkraftmaschine gemäß dem Oberbegriff des Anspruchs 1 ist bekannt aus der EP 1 178 185 A2. Danach ist die Scheibe mit zumindest einer stirnseitigen Verzahnung versehen, die partiell sowohl mit Verzahnungen eines mit dem Antriebsrad in drehfester Verbindung stehenden ersten Bauteil als auch mit einem mit der Nockenwelle in drehfester Verbindung stehenden weiteren Bauteils kämmt. Die Scheibe selbst ist über ein Wälzlager drehbar auf einem Wellenzapfen der Stelleinrichtung geführt. Dabei nimmt die Lagerung insgesamt eine Lage ein, die um einen Winkel zur Querebene der Längsachse der Nockenwelle versetzt ist. Dadurch wird die Scheibe insgesamt in eine Taumelbewegung versetzt, so dass sich partiell Zähne der Scheibe mit Zähnen der beiden Bauelemente im Eingriff befinden.

Aufgrund der vorhandenen Verzahnungen und der Ausbildung des Axialexzentergetriebes als Taumelantrieb weist diese Verstelleinrichtung ungünstige bauliche Abmessungen auf, so dass sie nicht in jeden vorgegebenen Bauraum an der Stirnseite einer in ein Kraftfahrzeug eingebauten Brennkraftmaschine passt. Außerdem bestehen erhebliche Probleme, die Verzahnungen dieses Drehmomentwandlers (Verstellgetriebe) spielfrei zueinander laufen zu lassen. Es können daher während des Betriebes der Brennkraftmaschine in erheblichem Maße unerwünschte Geräusche entstehen, deren Ursache in erster Linie in dem stark veränderlichen Wechselmoment der Nockenwelle begründet sind, letztendlich aber durch das Verzahnungsspiel erzeugt werden. Eventuell im Getriebe auftretendes Spiel wird entsprechend dem Übersetzungsverhältnis von Verstell- zu An- bzw. Abtriebswelle des Getriebes gewandelt. Übersetzt werden dabei aber auch vorhandene Bauteilspiele, so dass geringes Verzahnungsverdrehflankenspiel zwischen der Verzahnung der Verstellwelle und des kämmenden Gegenrades ins Große übersetzt wird und die Geräuschentstehung begünstigt. Des weiteren entsteht in einem Taumelgetriebe aufgrund des Taumelns ein sogenanntes aufstehendes Moment (Unwuchtmoment) während der Verstellung.

### Zusammenfassung der Erfindung

Der Erfindung liegt daher die Aufgabe zu Grunde, diese geschilderten Nachteile zu vermeiden und somit ein hochübersetztes Dreiwellengetriebe zu schaffen, das zum einen eine äußerst kompakte Bauform mit einem entsprechenden Gewichtsvorteil aufweist und welche zum anderen frei von Unwuchtmomenten ist und an welchem das Verzahnungsspiel minimiert wird.

Erfindungsgemäß wird diese Aufgabe dadurch gelöst, dass die Scheibe drehfest mit der Nockenwelle verbunden und als in Axialrichtung der Nockenwelle flexibles Bauelement ausgebildet ist, wobei die Stelleinrichtung die flexible Scheibe in axialer Richtung verformt. Somit kann auf eine zweite Verzahnung zwischen der Scheibe und der Nockenwelle sowie auf eine Wälz- oder Gleitlagerung der Scheibe auf einem Wellenzapfen der Stelleinrichtung verzichtet werden. Insgesamt ist dadurch eine erheblich kompaktere Bauform der Vorrichtung realisierbar. Aufgrund der flexiblen Ausbildung der Scheibe lässt sich außerdem ein spielfreier Verzahnungseingriff zwischen der Scheibe und der Gegenverzahnung realisieren. Je nach Kinematik, die sich aus der Ausgestaltung und Bewegung des Axialexzentergetriebes in Kombination mit der ausgeführten Verzahnung ergibt, finden sich ein, zwei oder mehr Verzahnungseingriffe, die zu einer hohen Anzahl tragender Zähne und damit zu einer kompakten Bauweise führen. Zur Realisierung eines hochübersetzten Dreiwellengetriebes wird die Zähnezahl, wie üblich, zwischen Scheibe und Verstellelement um mindestens einen Zahn voneinander abweichen.

In weiterer Ausgestaltung der Erfindung kann die Stelleinrichtung als Druckscheibe ausgebildet sein, die an der der zweiten Verzahnung der flexiblen Scheibe gegenüberliegenden Außenfläche anliegt. Diese Druckscheibe steht mit einem Rotor eines Elektromotors in Verbindung und verformt die Scheibe in der Weise, dass deren Verzahnung partiell an einer oder mehreren Stellen mit der Gegenverzahnung im Eingriff ist.

Weiterhin kann die Druckscheibe an ihrer der Scheibe zugewandten Fläche eine oder mehrere örtliche Erhebungen aufweisen. Natürlich besteht auch die Möglichkeit, dass die vorgenannte Fläche der Druckscheibe insgesamt als zu der Querebene der Nockenwelle verlaufende schiefe Ebene ausgebildet ist. Der Verlauf der Fläche kann aber auch in anderer Weise annähernd Harmonisch ausgebildet sein, indem er beispielsweise entsprechend einer Sinusfunktion verläuft. Die Anzahl der Abschnitte, in denen die Druckscheibe Erhebungen aufweist, entspricht der Anzahl der Eingriffspunkte. Pro Eingriffspunkt sind mehrere Zähne im Eingriff, wobei sich die Anzahl tragender Zähne mit dem zwischen An- und Abtriebswelle wirkenden Drehmoment erhöht. Rotiert die Druckscheibe so rotieren die erhabenen Abschnitte, woraus eine Relativverstellung von Scheibe zu Verstellelement resultiert.

Außerdem kann die Druckscheibe an ihrer von der Scheibe abgewandten Fläche an einer Gehäusewandung der Verstelleinrichtung abgestützt sein. Auf diese Weise besteht die Möglichkeit, die Druckscheibe dünnwandiger oder aus einem leichteren Werkstoff herzustellen. Die Druckscheibe und/oder der Rotor können beispielsweise aus Leichtmetall oder Kunststoff hergestellt sein oder aus einem Verbundwerkstoff bestehen. Dadurch wird in vorteilhafter Weise das Massenträgheitsmoment der relativ bewegten Bauteile minimiert.

Die der Scheibe zugewandte Oberfläche des Verstellelements ist vorzugsweise im Wesentlichen ballig ausgebildet. Dadurch lässt sich die an der Nockenwelle drehfest fixierte Scheibe in günstiger Weise um den Punkt ihrer Befestigung verformen, wobei die an ihrem äußeren Umfang vorgesehene Verzahnung in den partiell verformten Bereichen flächig in der Gegenverzahnung anliegt.

In weiterer Ausgestaltung der Erfindung soll die Druckscheibe Wälzkörper aufnehmen, über welche sie axial an der Scheibe gelagert ist. Dabei kann die Druckscheibe beispielsweise konkav ausgebildete Taschen aufweisen, in denen die Wälzkörper geführt sind. In gleicher Weise können auch an der der Gehäusewandung zugewandten Seite der Druckscheibe Wälzkörper vorgesehen sein. Durch diese axiale Wälzlagerung der Druckscheibe lässt sich insgesamt ein reibungsarmer Antrieb realisieren, wodurch sich natürlich auch ein vorzeitiger Verschleiß der Bauteile verhindern lässt. Die Wälzkörper sind vorzugsweise als Zylinderrollen oder Nadeln ausgebildet. Es besteht auch die Möglichkeit Wälzkörper in einem Käfig zu führen und mit unterschiedlichen Durchmessern auszubilden.

In weiterer Ausgestaltung der Erfindung soll die Scheibe an ihrem radial inneren Abschnitt durch zumindest einen auf der Nockenwelle mittels einer zentralen Schraube verspannten Ringes drehfest fixiert sein. Zwischen einer ringförmigen Anlagefläche der Nockenwelle und diesem Ring ist die Scheibe an ihrem radial inneren Abschnitt verspannt, so dass sich eine kraftschlüssige Verbindung der Bauteile Scheibe und Nockenwelle ergibt. Der Kraftschluß kann durch zusätzliche diamant- oder wolframcarbidbeschichtete Zwischenscheiben erhöht werden. Sollte diese kraftschlüssige Verbindung für die Funktion nicht ausreichen, so kann anstelle dessen auch eine formschlüssige Verbindung vorgesehen sein, bei welcher die Scheibe an ihrem radial inneren Abschnitt mit Ausnehmungen oder Vorsprüngen versehen ist, die in entsprechende Ausnehmungen und Vorsprünge sowohl des Ringes als auch der Anlagefläche der Nokkenwelle eingreifen.

Schließlich sollen sowohl die Druckscheibe als auch ein mit dieser zusammenwirkender Rotor auf der Nockenwelle gelagert sein. Dabei besteht die Möglichkeit, diese Lagerung, die vorzugsweise als Nadellager ausgebildet ist, am äußeren Umfang des die Scheibe mit der Nockenwelle verspannenden Ringes vorzusehen.

### Kurze Beschreibung der Zeichnung

Weitere Merkmale der Erfindung ergeben sich aus der nachfolgenden Beschreibung und aus der Zeichnung, in der ein Ausführungsbeispiel der Erfindung vereinfacht dargestellt ist. Es zeigen:
- Figur 1: einen Längsschnitt durch eine erfindungsgemäße Vorrichtung zur Veränderung der Steuerzeiten einer Brennkraft-maschine,
- Figur 2: eine Ansicht einer in der Vorrichtung nach Figur 1 verwendeten Scheibe, die partiell verformt ist,
- Figur 3: eine schematische Darstellung einer Anordnung eines mit dem Axialexzentergetriebe in Verbindung stehenden Elektromotors mit zylinderkopffestem Stator und
- Figur 4: eine schematische Darstellung einer Anordnung eines mit dem Axialexzentergetriebe in Verbindung stehenden Elektromotors in einem Antriebsrad.

### Ausführliche Beschreibung der Zeichnung

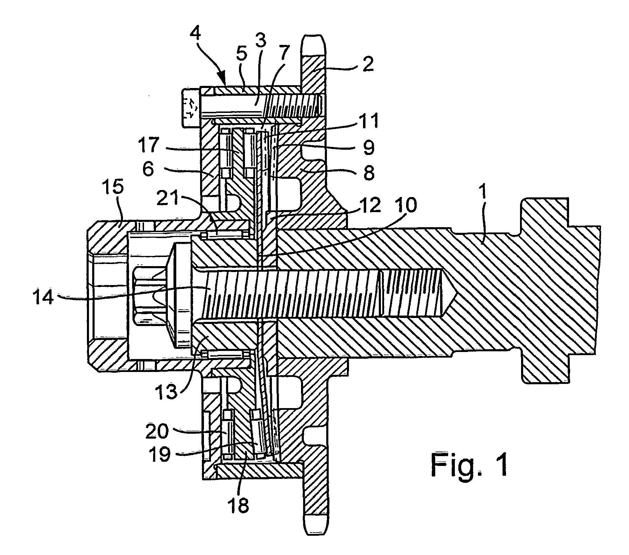

In der Figur 1 ist mit 1 ein Endabschnitt einer Nockenwelle einer Brennkraftmaschine bezeichnet, auf welcher ein als Kettenrad ausgebildetes Antriebsrad 2 verdrehbar gelagert ist. Dieses Antriebsrad 2 wird von einem nicht näher dargestellten Abtriebsrad einer Kurbelwelle der Brennkraftmaschine aus über eine ebenfalls nicht dargestellte Kette angetrieben. Selbstverständlich kann anstelle der Kette auch ein Zahnriemen- oder Zahnradtrieb vorgesehen sein, wobei dann ein entsprechendes der Zahnteilung des Zahnriemens angepasstes Antriebsrad vorgesehen ist. Mit dem Antriebsrad 2 ist über Befestigungsschrauben 3 ein Gehäuse 4 verspannt, welches aus einem ringförmigen Gehäuseteil 5 und einer scheibenförmigen Gehäusewandung 6 besteht. Das Antriebsrad 2, der ringförmige Gehäuseteil 5 und die scheibenförmige Gehäusewandung 6 bilden gemeinsam einen Innenraum 7 des Gehäuses 4.

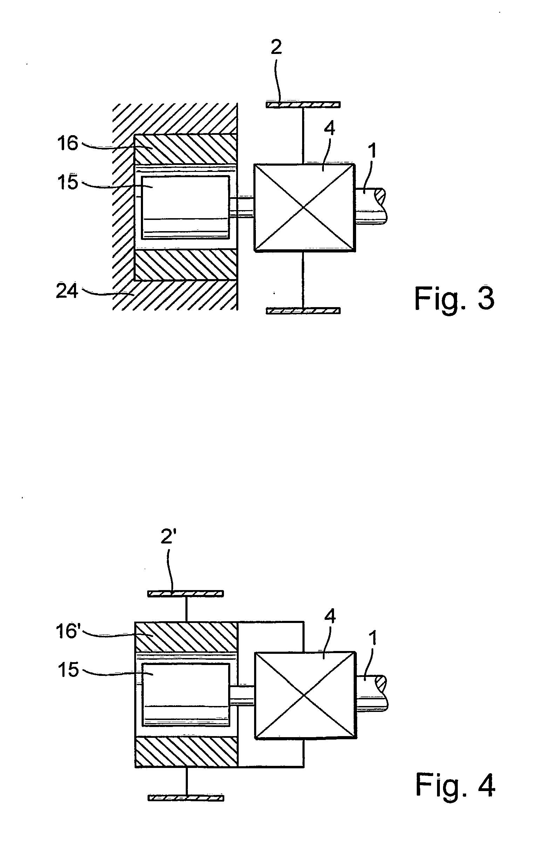

Das Antriebsrad 2 weist an seiner dem Innenraum 7 zugewandten Stirnseite ein als Verstellelement 8 dienenden Abschnitt auf, der mit einer ersten stirnseitigen Verzahnung 9 versehen ist. Auf dem Endabschnitt 1 der Nockenwelle ist drehfest eine Scheibe 10 angeordnet, die in axialer Richtung der Nockenwelle verformbar ist. Die Scheibe 10 weist eine zweite stirnseitige Verzahnung 11 auf, die sich in einem Zustand, in dem sie nicht verformt ist, nicht im Eingriff mit der ersten stirnseitigen Verzahnung 9 befindet. Die Scheibe 10 ist dadurch am Endabschnitt 1 der Nockenwelle fixiert, dass sie zwischen einem Flansch 12 und einem Ring 13 mit Hilfe einer Zentralschraube 14 verspannt ist. Dabei ist die einen Bund aufweisende Zentralschraube 14 axial in den Endabschnitt 1 der Nockenwelle eingeschraubt. Der Ring 13 dient außerdem zur Lagerung eines Rotors 15, der, wie in den nachfolgenden Figuren 3 und 4 schematisch dargestellt, mit einem Stator 16 eines elektromotorischen Antriebs zusammenwirkt. Dabei ist der Rotor 15 als Verstellwelle ausgebildet und mit einer nicht näher dargestelten Motorwelle verbunden.

Mit dem Rotor 15 ist eine als Stelleinrichtung dienende Druckscheibe 17 drehfest verbunden. Die Druckscheibe 17 ist an zumindest eine Stelle ihrer der Scheibe 10 zugewandten Stirnfläche mit einer Erhebung 18 versehen, wobei diese Erhebung 18 der Figur 1 in der unteren Hälfte der Schnittdarstellung entnehmbar ist. Durch diese Erhebung 18 wird die Scheibe 10 soweit in axiale Richtung verformt, dass sich ihre zweite stirnseitige Verzahnung 11 mit der ersten stirnseitigen Verzahnung 9 des Verstellelements partiell im Eingriff befindet. Dabei ist die erste stirnseitige Verzahnung 9 mit einer balligen Kontur versehen. In der Druckscheibe 17 sind zwei Sätze von Zylinderrollen 19 und 20 angeordnet, wobei ein erster Satz der Zylinderrollen 19 an der der zweiten stirnseitigen Verzahnung 11 abgewandten Stirnfläche der Scheibe 10 anliegt, während sich die Druckscheibe 17 mittels des zweiten Satzes von Zylinderrollen 20 an der scheibenförmigen Gehäusewandung 6 abstützt. Weiterhin ist der Rotor 15 gemeinsam mit der Druckscheibe 17 mittels eines Nadellagers 21 auf einem äußeren Umfang des Rings 13 gelagert.
Alternativ dazu können die Zylinderrollen 19 entfallen, wobei die entsprechend ausgebildete Druckscheibe auf der Scheibe gleitet. Außerdem besteht auch die Möglichkeit, die Zylinderrollen nur in einem Käfig anzuordnen, wobei diese Anordnung die Druckscheibe ersetzt. Die Zylinderrollen könnten dann mit unterschiedlichen Durchmessern ausgebildet sein.

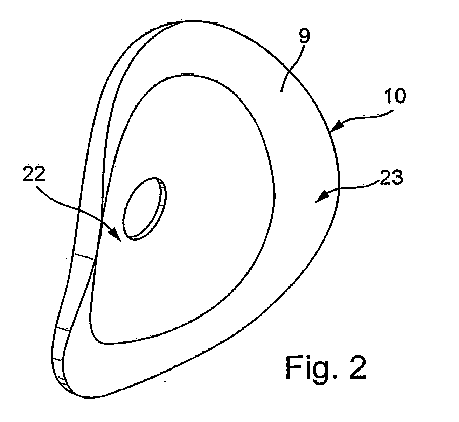

Aus der Figur 2 geht die flexible Verformung der Scheibe 10 hervor. Der mit der zweiten stirnseitigen Verzahnung 11 versehene Rand der Scheibe 10 ist in dieser Darstellung in einem ersten Bereich 22 und einem zweiten Bereich 23 soweit in axialer Richtung verformt, dass sich in diesen beiden Bereichen 22 und 23 die stirnseitigen Verzahnungen 9 und 11 im Eingriff befinden.

In der Figur 3 ist ein Aufbau eines Dreiwellengetriebes schematisch dargestellt, bei dem der Stator 16 innerhalb eines Zylinderkopfes 23 angeordnet ist. Der Stator 16 steht also still, und bei einer Bestromung vorzugsweise des Elektromotors, wird der Rotor 15 aufgrund einer eigenen Drehgeschwindigkeit, die von der Drehgeschwindigkeit des Antriebsrades 2 abweicht, eine Verdrehung der in Figur 1 dargestellten Druckscheibe 17 herbeiführen.

In Figur 4 ist ein Stator 16' innerhalb eines Antriebsrades 2' angeordnet und rotiert folglich mit der Drehzahl des Antriebsrades 2' bzw. mit halber Drehzahl der Kurbelwelle der Brennkraftmaschine. Die Bestromung des Elektromotors kann dabei beispielsweise mittels eines nicht näher dargestellten Schleifringes oder Transponders erfolgen.

Wie insbesondere der Figur 1 in Verbindung mit Figur 2 zu entnehmen ist, erfolgt bei der erfindungsgemäßen Vorrichtung zur Veränderung der Steuerzeiten einer Brennkraftmaschine die Verstellung der Steuerzeiten, also eine Verdrehung der Nockenwelle (Endabschnitt 1 der Nockenwelle) gegenüber dem Antriebsrad 2 mittels eines Axialexzentergetriebes, welches äußerst kompakt gestaltet ist und an welchem ein unerwünschtes Verzahnungsspiel vermieden werden kann. Während eines Verstellvorgangs wird die mit zumindest einer in axialer Richtung vorstehenden Erhebung 18 versehene Druckscheibe derart gegenüber dem Antriebsrad 2 verdreht, dass partiell nacheinander sämtliche Abschnitte der stirnseitigen Verzahnungen 11 der Scheibe 10 und der auf dem Antriebsrad 2 angeordneten Verzahnung 9 des Verstellelements 8 miteinander in Eingriff gelangen. Bei einer Abweichung der Zähnezahlen beider stirnseitigen Verzahnungen 9 und 11 um einen Zahn wird bei einer Umdrehung der Druckscheibe eine Verstellung der Nockenwelle 1 gegenüber dem Antriebsrad 2 um den Winkel des einen Zahnes erfolgen. Die vorstehend erwähnten Vorteile werden dadurch erzielt, dass die äußerst dünnwandige und flexible Scheibe 10 drehfest mit dem Endabschnitt 1 der Nockenwelle verbunden ist und mittels der Druckscheibe 17 in axialer Richtung verformt wird.

### Bezugszeichen

- 1: Endabschnitt einer Nockenwelle
- 2: Antriebsrad
- 2': Antriebsrad
- 3: Befestigungsschraube
- 4: Gehäuse
- 5: ringförmiges Gehäuseteil
- 6: scheibenförmige Gehäusewandung
- 7: Innenraum von 4
- 8: Verstellelement
- 9: erste stirnseitige Verzahnung
- 10: Scheibe
- 11: zweite stirnseitige Verzahnung
- 12: Flansch
- 13: Ring
- 14: Zentralschraube
- 15: Rotor
- 16: Stator
- 16': Stator
- 17: Druckscheibe
- 18: Erhebung
- 19: erster Satz Zylinderrollen
- 20: zweiter Satz Zylinderrollen
- 21: Nadellager
- 22: erster Bereich
- 23: zweiter Bereich
- 24: Zylinderkopf

## Patentansprüche

1. Vorrichtung zur Veränderung der Steuerzeiten einer Brennkraftmaschine mit einer einen Drehwinkel zwischen einem Antriebsrad (2) und einer Nockenwelle (1) verändernden Verstelleinrichtung, die als Axialexzentergetriebe ausgebildet ist, mit einem eine erste stirnseitige Verzahnung (9) aufweisenden, drehfest mit dem Antriebsrad (2) verbundenen Verstellelement (8) und mit einer in ihrem radial äußeren Bereich eine zweite stirnseitige Verzahnung (11) aufweisenden Scheibe (10), deren zweite stirnseitige Verzahnung über eine Stelleinrichtung (17) in eine Verstellbewegung versetzt wird, wobei die stirnseitigen Verzahnungen (9 und 11) um zumindest einen Zahn voneinander abweichen, **dadurch gekennzeichnet, dass** die Scheibe (10) drehfest mit der Nockenwelle ( 1) verbunden und als in Axialrichtung der Nockenwelle ( 1) flexibles Bauelement ausgebildet ist, wobei die Stelleinrichtung (17) die Scheibe (10) in axialer Richtung verformt.

2. Vorrichtung nach Anspruch 1, **dadurch gekennzeichnet, dass** die Stelleinrichtung als Druckscheibe (17) ausgebildet ist, die an der der zweiten Verzahnung (11) der flexiblen Scheibe (10) gegenüberliegenden Außenfläche anliegt.

3. Vorrichtung nach Anspruch 1, **dadurch gekennzeichnet, dass** die Stelleinrichtung als Druckscheibe (17) ausgebildet ist, die an der der zweiten Verzahnung (11) der flexiblen Scheibe (10) gegenüberliegenden Außenfläche anliegt, wobei die der Scheibe (10) zugewandte Fläche der Druckscheibe (17) eine oder mehrere partielle Erhebungen aufweist.

4. Vorrichtung nach Anspruch 1, **dadurch gekennzeichnet, dass** die Stelleinrichtung als Druckscheibe (17) ausgebildet ist, die an der der zweiten stirnseitigen Verzahnung (11) der flexiblen Scheibe (10) gegenüberliegenden Außenfläche anliegt, wobei die Druckscheibe (17) an ihrer von der Scheibe (10) abgewandten Fläche an einer Gehäusewandung (6) der Verstelleinrichtung abgestützt ist.

5. Vorrichtung nach Anspruch 1, **dadurch gekennzeichnet, dass** die der Scheibe (10) zugewandte Oberfläche des Verstellelements (8) im Wesentlichen ballig ausgebildet ist.

6. Vorrichtung nach Anspruch 1, **dadurch gekennzeichnet, dass** die Stelleinrichtung als Druckscheibe (17) ausgebildet ist, die an der der zweiten stirnseitigen Verzahnung (11) der flexiblen Scheibe (10) gegenüberliegenden Außenflächen anliegt, wobei die Druckscheibe (17) an ihrer von der Scheibe (10) abgewandten Fläche an einer Gehäusewandung (6) der Verstelleinrichtung abgestützt ist und wobei die Druckscheibe Wälzkörper (20) aufnimmt, über welche sie axial an der Gehäusewandung (6) gelagert ist.

7. Vorrichtung nach Anspruch 1, **dadurch gekennzeichnet, dass** die Stelleinrichtung als Druckscheibe (17) ausgebildet ist, die an der der zweiten stirnseitigen Verzahnung (11) der flexiblen Scheibe (10) gegenüberliegenden Außenfläche anliegt, und dass die Druckscheibe (17) Wälzkörper (19) aufnimmt, über welche sie axial an der Scheibe (10) gelagert ist.

8. Vorrichtung nach Anspruch 1, **dadurch gekennzeichnet, dass** die Scheibe (10) an ihrem radial inneren Abschnitt durch zumindest einen auf der Nockenwelle (1) mittels einer zentralen Schraube verspannten Ringes (13) drehfest fixiert ist.

9. Vorrichtung nach Anspruch 1, **dadurch gekennzeichnet, dass** sowohl die Druckscheibe (17) als auch ein mit dieser zusammenwirkender Rotor (15) auf der Nockenwelle (1) gelagert sind.

## Claims

1. Device for varying the valve timing in an internal combustion engine with an adjusting device that varies an angle of rotation between a drive pinion (2) and a camshaft (1), said adjusting device being configured as an eccentric axial transmission comprising an adjusting element (8) that is fixed rotationally fast to the drive pinion (2) and provided with a first front-face gearing (9), the adjusting device further comprising a disk (10) provided in its radially outer region with a second front-face gearing (11), a setting device (17) imparting an adjusting displacement to the second front-face gearing (11) of the disk (10), and the front-face gearings (9 and 11) differing from each other by at least one tooth, **characterised in that** the disk (10) is connected rotationally fast to the camshaft (1) and is configured as a component that is flexible in the axial direction of the camshaft (1), and the setting device (17) deforms the disk (10) in axial direction.

2. Device according to claim 1, **characterised in that** the setting device is configured as a thrust washer (17) that bears against the outer surface turned away from the second gearing (11) of the flexible disk (10).

3. Device according to claim 1, **characterised in that** the setting device is configured as a thrust washer (17) that bears against the outer surface turned away from the second gearing (11) of the flexible disk (10), and the surface of the thrust washer (17) facing the disk (10) comprises one or more partial elevations.

4. Device according to claim 1, **characterised in that** the setting device is configured as a thrust washer (17) that bears against the outer surface turned away from the second front-face gearing (11) of the flexible disk (10), and the thrust washer (17), at its surface turned away from the disk (10), is supported on a housing wall (6) of the adjusting device.

5. Device according to claim 1, **characterised in that** the surface of the adjusting element (8) facing the disk (10) has a substantially convex configuration.

6. Device according to claim 1, **characterised in that** the setting device is configured as a thrust washer (17) that bears against the outer surface turned away from the second front-face gearing (11), the thrust washer (17), at its surface turned away from the disk (10), is supported on a housing wall (6) of the adjusting device, and **in that** the thrust washer (17) receives rolling elements (20) through which it is mounted in axial direction on the housing wall (6).

7. Device according to claim 1, **characterised in that** the setting device is configured as a thrust washer (17) that bears against the outer surface turned away from the second front-face gearing (11), and **in that** the thrust washer (17) receives rolling elements (19) through which it is mounted in axial direction on the disk (10).

8. Device according to claim 1, **characterised in that**, at its radially inner section, the disk (10) is fixed rotationally fast through at least one ring (13) that is braced against the camshaft (1) by means of at least one central screw.

9. Device according to claim 1, **characterised in that** the thrust washer (17) as well as a rotor (15) cooperating with the thrust washer (17) are mounted on the camshaft (1).

## Revendications

1. Dispositif de variation de la distribution d'un moteur à combustion interne au moyen d'un dispositif d'ajustage qui varie l'angle de rotation entre un pignon de commande (2) et un arbre à cames (1), ledit dispositif d'ajustage étant configuré sous la forme d'une transmission axiale excentrique comprenant un élément (8) d'ajustage qui comprend une première denture frontale (9) en étant immobilisé en rotation sur le pignon de commande (2), et ce dispositif de d'ajustage comprenant, en outre, un disque (10) qui comprend dans sa région radiale extérieure, une seconde denture frontale (11), un dispositif de réglage (17) imprimant un mouvement d'ajustage à la seconde denture frontale (11) du disque (10), et les deux dentures frontales (9 et 11) différant, l'une de l'autre, par, au moins, une dent, **caractérisé en ce que** le disque (10) est immobilisé en rotation sur l'arbre à cames (1) en étant configuré sous la forme d'un composant qui est flexible en direction axiale de l'arbre à cames (1), et **en ce que** le dispositif de réglage (17) déforme le disque (10) en direction axiale.

2. Dispositif selon la revendication 1, **caractérisé en ce que** le dispositif de réglage est configuré sous la forme d'une rondelle de butée (17) qui s'appuie contre la surface extérieure orientée à l'opposé de la seconde denture frontale (11) du disque (10) flexible.

3. Dispositif selon la revendication 1, **caractérisé en ce que** le dispositif de réglage est configuré sous la forme d'une rondelle de butée (17) qui s'appuie contre la surface extérieure orientée à l'opposé de la seconde denture frontale (11) du disque (10) flexible, et **en ce que** la surface de la rondelle de butée (17) faisant face au disque (10) comprend une ou plusieurs élévations partielles.

4. Dispositif selon la revendication 1, **caractérisé en ce que** le dispositif de réglage est configuré sous la forme d'une rondelle de butée (17) qui s'appuie contre la surface extérieure orientée à l'opposé de la seconde denture frontale (11) du disque (10) flexible, et **en ce que** la rondelle de butée (17), à sa surface détournée du disque (10) est supportée sur une paroi (6) du boîtier du dispositif d'ajustage.

5. Dispositif selon la revendication 1, **caractérisé en ce que** la surface de l'élément (8) d'ajustage faisant face au disque (10) a une configuration sensiblement bombée.

6. Dispositif selon la revendication 1, **caractérisé en ce que** le dispositif de réglage est configuré sous la forme d'une rondelle de butée (17) qui s'appuie contre la surface extérieure orientée à l'opposé de la seconde denture frontale (11) du disque (10) flexible, **en ce que** la rondelle de butée (17), à sa surface détournée du disque (10) est supportée sur une paroi (6) du boîtier du dispositif d'ajustage, et **en ce que** la rondelle de butée (17) reçoit des éléments roulants (20) au moyen desquels elle est montée en direction axiale sur la paroi (6) du boîtier.

7. Dispositif selon la revendication 1, **caractérisé en ce que** le dispositif de réglage est configuré sous la forme d'une rondelle de butée (17) qui s'appuie contre la surface extérieure orientée à l'opposé de la seconde denture frontale (11) du disque (10) flexible, et **en ce que** la rondelle de butée (17) reçoit des éléments roulants (19) au moyen desquels elle est montée en direction axiale sur le disque (10).

8. Dispositif selon la revendication 1, **caractérisé en ce que**, au niveau de sa section radiale intérieure, le disque (10) est immobilisé en rotation par, au moins, un anneau (13) qui est calé contre l'arbre à cames (1) par une vis centrale.

9. Dispositif selon la revendication 1, **caractérisé en ce que** la rondelle de butée (17) et, également, un rotor (15) qui coopère avec celle-ci sont montés sur l'arbre à cames (1).
